**Europäisches Patentamt**

**European Patent Office**

**Office européen des brevets**

(19)

(11) Numéro de publication : **0 482 995 A1**

# (12) DEMANDE DE BREVET EUROPEEN

(21) Numéro de dépôt : **91402813.9**

(22) Date de dépôt : **22.10.91**

(51) Int. Cl.⁵ : **B60K 5/12, F16F 3/08, F16F 1/26**

(30) Priorité : **25.10.90 FR 9013246**

(43) Date de publication de la demande :
**29.04.92 Bulletin 92/18**

(84) Etats contractants désignés :
**BE DE ES GB IT LU NL SE**

(71) Demandeur : **HUTCHINSON
2 rue Balzac
F-75008 Paris (FR)**

(72) Inventeur : **Simon, Jean-Michel
86, rue de Chatillon
F-92140 Clamart (FR)**

(74) Mandataire : **Picard, Jean-Claude Georges et al
Cabinet Plasseraud 84, rue d'Amsterdam
F-75009 Paris (FR)**

(54) **Support élastique, en particulier pour moteur de véhicule.**

(57)    Support élastique selon l'une quelconque des revendications 1 à 8 de la demande de brevet principale, caractérisé en ce que lesdites armatures 2, 3 sont constituées chacune d'une tôle emboutie présentant une ouverture 16 en forme de tunnel, pour la réception des extrémités correspondantes desdites plaques 1.

Les extrémités des plaques 1 sont logées à force ou serties dans les ouvertures respectives 16 desdites armatures 2, 3.

FIG.1.

**EP 0 482 995 A1**

La présente invention concerne un support élastique, en particulier pour moteur de véhicule, du type comportant une première armature propre à être fixée à la structure du véhicule, une seconde armature propre à être fixée sur le moteur pour le supporter, et entre ces deux armatures un système élastique présentant une rigidité relativement faible en z, à savoir en direction verticale, et des rigidités plus élevées - pouvant être différentes l'une de l'autre - dans les deux directions transversales x et y constituant avec la précédente un système orthonormé, ledit système élastique comprenant un ensemble de plaques minces parallèles et espacées, en matériau flexible, s'étendant de façon générale transversalement à ladite direction verticale, les extrémités de ces plaques étant supportées d'une part sur ladite première armature, d'autre part sur la seconde, par l'intermédiaire de blocs de matériau élastique superposés, intercalés en sandwich dans lesdites extrémités des plaques, ces blocs encastrant les extrémités des plaques sans liaison rigide avec les armatures respectives.

Le but de la présente invention est l'élaboration d'une solution technologique simple et bon marché pour la réalisation des armatures, propre à leur conférer une grande rigidité, à permettre leur fabrication aisée et en grande série, et à rendre facile et rapide le montage desdites plaques dans ces armatures.

Ce but est atteint dans un support du type général défini au début, caractérisé en ce que lesdites armatures sont constituées chacune d'une tôle emboutie présentant une ouverture en forme de tunnel, pour la réception des extrémités correspondantes desdites plaques.

Les extrémités des plaques peuvent être logées à force ou serties dans les ouvertures respectives desdites armatures.

Il est en tout cas encore avantageux de prévoir que les extrémités desdites plaques sont enserrées dans des bagues métalliques propres à les solidariser toutes ensemble.

Deux modes d'exécution de l'invention vont maintenant être décrits à titre d'exemples nullement limitatifs, avec référence aux figures du dessin annexé dans lequel :

– la figure 1 est une vue en perspective de l'ensemble d'un support conforme à l'invention, avant montage ;

– la figure 2 est une vue en coupe axiale du support de la figure 1 selon la ligne II-II de la figure 3 ;

– la figure 3 est une vue en coupe transversale du support de la figure 1 selon ligne III-III de la figure 2 ;

– la figure 4 est une vue analogue à celle de la figure 1, montrant une variante de réalisation du support ;

– la figure 5 est une vue en coupe axiale du support de la figure 4 selon la ligne V-V de la figure 6 ; et

– la figure 6 est une vue en coupe transversale du support de la figure 4 selon la ligne VI-VI de la figure 5.

Dans les différentes figures du dessin ci-annexé, on a repris par commodité les mêmes références que dans la demande principale pour désigner les mêmes éléments du support, ou des éléments jouant le même rôle.

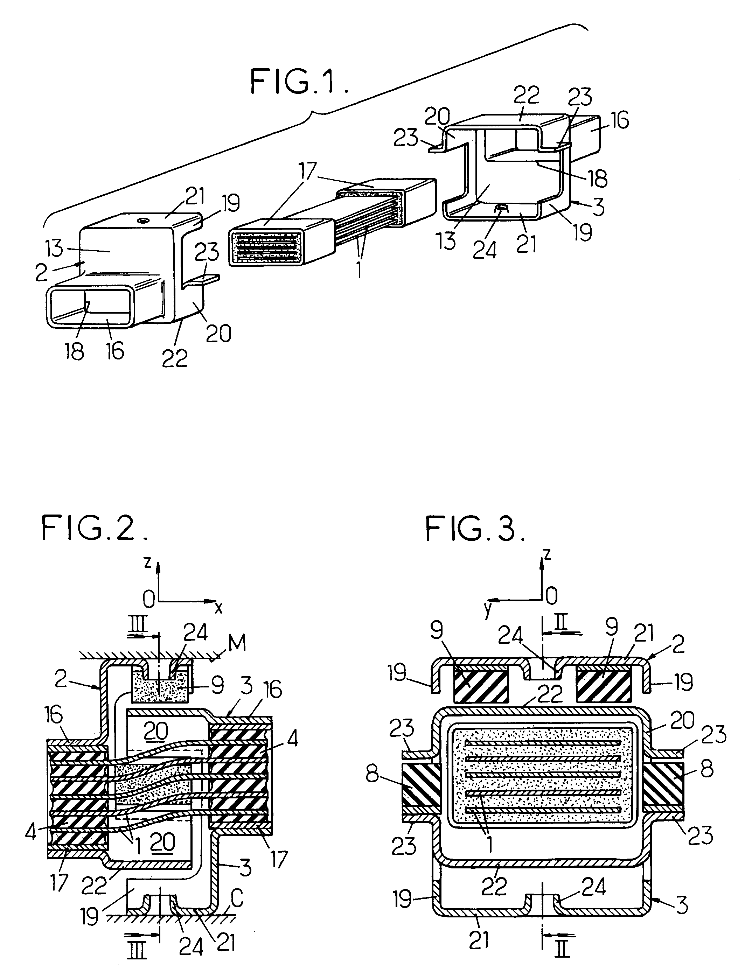

Ceci étant, on voit sur la figure 1 que les armatures en tôle emboutie 2 et 3 sont identiques mais renversées l'une par rapport à l'autre. Il n'est donc nécessaire d'en décrire qu'une seule, par exemple l'armature 3. Celle-ci se présente sous la forme d'un boîtier ouvert comportant un fond 13 dont un orifice rectangulaire 18 se prolonge vers l'extérieur par une ouverture en forme de tunnel 16. Les parois latérales découpées 19 et 20 de ce boîtier constituent des rebords prolongeant respectivement les parois latérales 21 et 22. Les parois latérales 20 sont pliées à angle droit vers l'extérieur pour constituer des appuis de butées 23, comme mieux visible sur la figure 3.

Les plaques élastiques 1 sont toutes solidarisées ensemble par des bagues métalliques 17 qui enserrent leurs extrémités et facilitent leur montage, par exemple à force, dans les tunnels 16 respectifs des armatures 2 et 3.

Sur la figure 2 on a schématisé en C un châssis de véhicule et en M son moteur, le support de l'invention étant destiné à soutenir ce dernier élastiquement sur le châssis. La fixation des armatures 2 et 3 respectivement sur le moteur et sur le châssis peut être assurée par des boulons (non représentés) traversant des trous épaulés 24 de la tôle des armatures.

On voit aussi sur la figure 2 les blocs de matériau en élastomère 4 dans lesquels sont encastrées les extrémités des plaques élastiques 1, et qui évitent tout pontage métallique entre les armatures 2 et 3 et ainsi la transmission excessive des vibrations de l'une à l'autre.

Les figures 2 et 3 montrent également une disposition possible des butées de traction 8 et de compression 9 propres à agir entre les armatures pour limiter leurs débattements verticaux respectifs dans les deux sens : les butées élastiques de traction 8 sont interposées entre les appuis respectifs en regard 23 des deux armatures, et les butées élastiques de compression 9 entre la paroi 21 de l'armature 2 et la paroi 22 de l'armature 3. L'espacement latéral de ces butées leur permet de reprendre le couple de renversement du moteur.

L'intérêt du mode de réalisation qui vient d'être décrit est de permettre d'atteindre parfaitement le but spécifié plus haut, et également de n'avoir à fabriquer que des armatures toutes identiques, que l'on dispose en quelque sorte en tête-bêche sur les extrémités des lames.

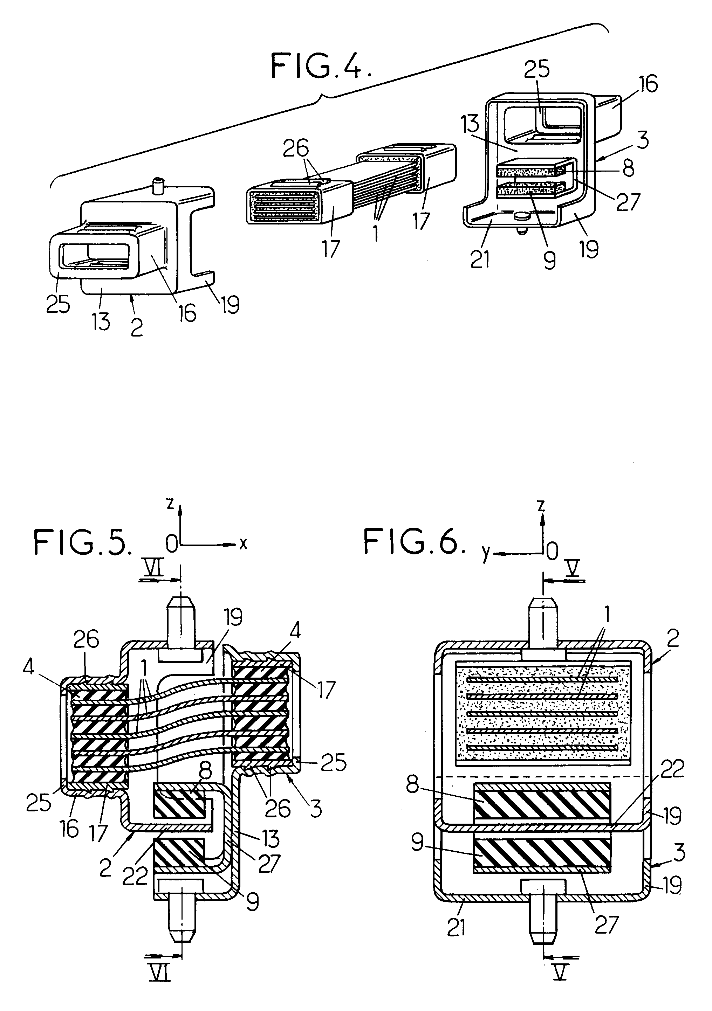

Dans le mode de réalisation des figures 4 à 6, les armatures 2 et 3 sont différentes. Elles comportent toutes deux des rebords latéraux sans appuis référencés en 19 par analogie avec le mode de réalisation précédent. Une autre différence réside dans le fait que les tunnels 16 se terminent par des rebords 25, qui peuvent servir de butées pour les extrémités des bagues 17 des plaques. On voit aussi, sur les figures 4 et 5, que ces bagues portent des dents 26 (crevés de la tôle) permettant d'améliorer l'assujettissement des extrémités des plaques 1 dans leurs tunnels 16 respectifs par une sorte de sertissage.

Pour ce qui est des butées de traction 8 et de compression 9, on voit qu'elles sont portées intérieurement par les ailes d'un fer 27 en U soudé (ou riveté) sur le fond 13 de l'armature 3, la paroi latérale 22 de l'autre armature venant se loger entre ces deux butées lors du montage.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Support élastique selon l'une quelconque des revendications 1 à 8 de la demande de brevet principale, caractérisé en ce que lesdites armatures (2, 3) sont constituées chacune d'une tôle emboutie présentant une ouverture (16) en forme de tunnel, pour la réception des extrémités correspondantes desdites plaques (1).

2. Support selon la revendication 1, caractérisé en ce que les extrémités desdites plaques (1) sont logées à force dans les ouvertures respectives (16) desdites armatures (2, 3).

3. Support selon la revendication 1, caractérisé en ce que les extrémités desdites plaques (1) sont serties dans les ouvertures respectives (16) desdites armatures (2, 3).

4. Support selon l'une quelconque des revendications précédentes, caractérisé en ce que les extrémités desdites plaques (1) sont enserrées dans des bagues métalliques (17) propres à les solidariser toutes ensemble.

5. Support selon l'une quelconque des revendications précédentes, caractérisé en ce qu'il comporte deux armatures (2, 3) identiques et montées en tête-bêche, chaque armature présentant un fond (13) dans lequel débouche un orifice (18) prolongé vers l'extérieur par ladite ouverture en forme de tunnel (16), et des parois latérales découpées (19, 20) prolongeant respectivement des parois latérales opposées (21, 22), les parois de l'une des paires (20) de parois latérales découpées étant pliées à angle droit vers l'extérieur pour constituer des appuis de butées (23).

6. Support selon la revendication 5, caractérisé en ce qu'il comporte des butées de traction (8) interposées entre les appuis respectifs (23) desdites armatures (2, 3), et des butées de compression (9) interposées entre l'une (21) des parois latérales opposées d'une des armatures et l'autre (22) des parois latérales opposées de l'autre armature.

7. Support selon l'une quelconque des revendications 1 à 4, caractérisé en ce qu'il comporte deux armatures (2, 3) différentes, l'une d'elles (3) étant pourvue d'un fer (27) en U portant intérieurement les butées de traction et de compression (8, 9), entre lesquelles vient se loger, lors du montage, une aile (22) de l'autre armature (2).

8. Support selon l'une quelconque des revendications précédentes, caractérisé en ce que lesdites ouvertures (16) en forme de tunnel présentent à leur extrémité extérieure un rebord de butée (25).

9. Support selon l'une quelconque des revendications 4 à 8, caractérisé en ce que lesdites bagues métalliques (17) sont pourvues de dents (26) propres à s'accrocher à l'intérieur desdites ouvertures respectives en forme de tunnel (16).

FIG.1.

FIG.2.

FIG.3.

FIG.4.

FIG.5.

FIG.6.

Office européen
des brevets

**RAPPORT DE RECHERCHE EUROPEENNE**

Numero de la demande

EP    91 40 2813

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN<br>vol. 8, no. 203 (M-326)(1640) 18 Septembre 1984<br>& JP-A-59 093 532 ( NIHON HATSUJIYOU KK ) 30 Mai 1984<br>* abrégé * | 1 | B60K5/12<br>F16F3/08<br>F16F1/26 |
| | --- | | |
| A | PATENT ABSTRACTS OF JAPAN<br>vol. 6, no. 120 (M-140)(998) 3 Juillet 1982<br>& JP-A-57 047 044 ( NIPPON HATSUJIYOU KK ) 17 Mars 1982<br>* abrégé * | 1 | |
| | --- | | |
| A | FR-A-2 570 032 (CENTRE DE RECHERCHES DE RESORTS)<br>* abrégé; figures * | 1 | |
| | --- | | |
| A | US-A-3 730 509 (R.JÖRN) | | |
| | ----- | | |

**DOMAINES TECHNIQUES RECHERCHES (Int. Cl.5)**

B60K
F16F
B60G

Le présent rapport a été établi pour toutes les revendications

| Lieu de la recherche | Date d'achèvement de la recherche | Examinateur |
|---|---|---|
| LA HAYE | 19 FEVRIER 1992 | PEMBERTON P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P0402)